# EUROPÄISCHE PATENTSCHRIFT

(11) **EP 0 494 213 B1**
(45) Veröffentlichungstag und Bekanntmachung des Hinweises auf die Patenterteilung: **10.11.1993**
(21) Anmeldenummer: 90914517.9
(22) Anmeldetag: 27.09.1990
(51) Int. Cl.: H02K 9/197, H02K 41/02

(54) **ELEKTRISCHE MASCHINE MIT FLUIDKÜHLUNG**
ELECTRICAL MACHINE WITH FLUID COOLING
MACHINE ELECTRIQUE A REFROIDISSEMENT LIQUIDE

(30) Priorität: 28.09.1989 DE 3932481
(43) Veröffentlichungstag der Anmeldung: 15.07.1992
(73) Patentinhaber: MAGNET-MOTOR GESELLSCHAFT FÜR MAGNETMOTORISCHE TECHNIK MBH, D-82319 Starnberg (DE)
(72) Erfinder: HEIDELBERG, Götz, D-8136 Starnberg-Percha (DE); EHRHART, Peter, D-8000 München 70 (DE); GRÜNDL, Andreas, D-8000 München 70 (DE)
(74) Vertreter: Klunker . Schmitt-Nilson . Hirsch
(86) Internationale Anmeldenummer: EP9001634
(87) Internationale Veröffentlichungsnummer: WO9105398

(56) Entgegenhaltungen:
- EP-A- 0 331 180
- DE-C- 335 201
- DE-C- 337 561
- FR-A- 517 949
- FR-A- 1 276 717
- FR-A-22 337 39

## Beschreibung

Die Erfindung bezieht sich auf eine elektrische Maschine mit:
a) einem Statorteil, der Statorpole und eine Stromleiter-Bewicklung aufweist;
b) einem Läuferteil, der unter Freilassung eines Luftspalts gegenüber dem Statorteil angeordnet ist und in magnetischer Wechselwirkung mit diesem steht;
c) wobei der Statorteil und der Läuferteil relativ zueinander in einer Richtung bewegbar sind, die mindestens im wesentlichen derjenigen Richtung entspricht, in der die Statorpole aufeinanderfolgend angeordnet sind;
d) einem Statorträger, an dem die Statorpole mitsamt ihrer Bewicklung angebracht sind, und der - im Schnitt quer zu der genannten Statorpol-Anordnungsrichtung betrachtet - eine im wesentlichen U-förmige Gestalt mit einer Basiswand und zwei Seitenwänden hat und auf seiner Luftspaltseite eine verschließende Abdeckung aufweist;
e) einem ersten Durchströmungsraum für Kühlfluid zwischen den Statorpolen und der ersten Seitenwand des Statorträgers sowie einem zweiten Durchströmungsraum für Kühlfluid zwischen den Statorpolen und der zweiten Seitenwand des Statorträgers, wobei die beiden Durchströmungsräume entlang der Reihe der Statorpole verlaufen, so daß das Kühlfluid mindestens Teilbereiche der Statorpolbewicklung bespülen kann;
f) einer im wesentlichen in der Statorpol-Anordnungsrichtung verlaufenden, ersten Durchströmungspassage für Kühlfluid, die in der Basiswand des Statorträgers oder in dem Statormaterial vorgesehen ist; und
g) inneren, zweiten Durchströmungspassagen für Kühlfluid, die durch mindestens einige der Statorpole hindurchführen und mit den Durchströmungsräumen sowie der ersten Durchströmungspassage in Verbindung stehen.

Eine elektrische Maschine dieser Art, konkret ein rotatorischer Elektromotor, ist aus dem Dokument FR-A-517949, Ausführungsform gemäß Figuren 8 bis 10, bekannt. Bei diesem Elektromotor strömt das Kühlfluid von einer unteren, axial mittigen Zuführöffnung aus in Umfangsrichtung sowohl entlang den beiden Stirnseiten des Stators als auch in Schlitzen des Statormaterials. An einer diametral gegenüberliegenden, oberen, axial mittigen Abflußöffnung werden diese drei Umfangsströmungen wieder gesammelt.

Der Erfindung liegt die Aufgabe zugrunde, eine elektrische Maschine mit einer Fluidkühlung für den Statorteil zu schaffen, die bei konstruktiv günstigem Aufbau eine besonders effektive Kühlung ermöglicht.

Zur Lösung dieser Aufgabe ist die elektrische Maschine erfindungsgemäß dadurch gekennzeichnet,
h) daß mindestens an einigen Stellen Räume zwischen der Statorpolbewicklung und der Abdeckung des Statorträgers als Verbindungspassagen für Kühlfluid vorgesehen sind, die mit den Durchströmungsräumen sowie zugeordneten, zweiten Durchströmungspassagen in Verbindung stehen;
i) und daß der Kühlfluid-Strömungsweg insgesamt derart ausgelegt ist, daß das Kühlfluid zunächst in dem ersten und dem zweiten Durchströmungsraum entlang der Reihe der Statorpole strömt und dann durch die Verbindungspassagen und die zweiten Durchströmungspassagen in den Statorplen in die abflußsammelnde, erste Durchströmungspassage strömt oder umgekehrt.

Aus dem Dokument FR-A-1276717 ist eine elektrische Maschine, konkret ein rotatorischer Elektromotor, bekannt, bei dem das Kühlfluid von einer unteren Zuführöffnung an der einen Axialseite des Motors zu einer diametral gegenüberliegenden, oberen Abflußöffnung an der anderen Axialseite des Motors strömt und dabei an den beiden Stirnseiten des Stators entlangströmt. Von der einen Stirnseite des Stators zu der anderen Stirnseite des Stators gelangt das Kühlfluid durch sich axial erstreckende Verbindungspassagen, die sich zwischen der Statorpolbewicklung und einer Statorabdeckung befinden. Die Statorpole weisen keine inneren Durchströmungspassagen auf.

Aus dem Dokument FR-A-517949, Ausführungsform gemäß Figuren 6 und 7, ist eine elektrische Maschine, konkret ein rotatorischer Elektromotor, mit axial und radial verlaufenden, inneren Durchströmungspassagen im Stator bekannt. Das Kühlfluid strömt beiden Stirnseiten des Stators jeweils durch einen äußeren Ringkanal radial von außen nach innen zu und gelangt von dort in Axialrichtung in die inneren Durchströmungspassagen. Das aus den inneren Durchströmungspassagen radial nach außen austretende Kühlfluid wird in einem in Umfangsrichtung verlaufenden Abflußraum, dem auch Kühlfluid von den beiden Stirnseiten des Stators her zufließt, gesammelt.

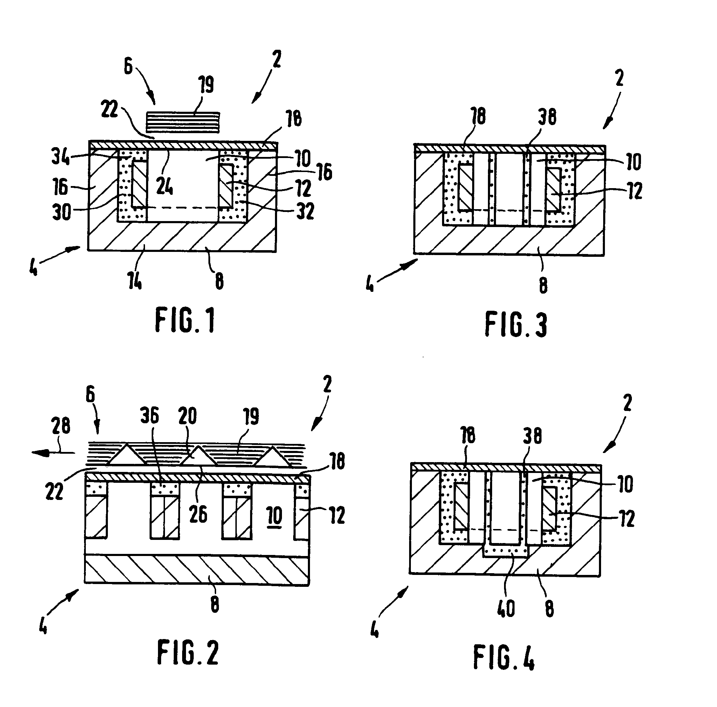

Aus dem Dokument DE-C-337561 ist eine elektrische Maschine, konkret ein rotatorischer Generator, bekannt, bei dem das Kühlfluid durch eine untere Zuführöffnung an der einen Axialseite der Maschine zuströmt und durch einen in Umfangsrichtung verlaufenden, äußeren Abflußraum mit einer axial mittigen, oberen Abflußöffnung abströmt. Von der einen Axialseite der Maschine zu der anderen Axialseite der Maschine gelangt das Kühlfluid durch axial verlaufende Strömungswege, die sich zwischen der Statorpolbewicklung und den Wänden der Statornuten befinden. Bei der Ausführungsform gemäß Fig. 1 strömt das Kühlfluid von der anderen Axialseite der Maschine her in Schlitze zwischen Statorabschnitten, die in rechtwinklig zu der Maschinenachse verlaufenden Ebenen liegen. Bei der Ausführungsform gemäß Fig. 2 sind stattdessen axial verlaufende, innere Durchströmungspassagen im Stator vorgesehen, die parallel zu den den Statornuten zugeordneten Strömungswegen durchströmt werden; durch axiale Übertrittsöffnungen gelangt das Kühlfluid von der anderen Axialseite der Maschine in den Abflußraum.

Verlustwärme entsteht in elektrischen Maschinen bekanntlich hauptsächlich in der Bewicklung (häufig schlagwortartig "Kupferverluste" genannt) und in dem ferromagnetischen Stator (häufig schlagwortartig "Eisenverluste" genannt). Bei der erfindungsgemäß ausgebildeten elektrischen Maschine wird Kühlfluid kanalisiert derart an der Statorpolbewicklung entlanggeleitet, daß mindestens Teilbereiche der Statorpolbewicklung direkt durch Bespülen mit Kühlfluid gekühlt werden, wodurch die Wärme von der Bewicklung besonders effektiv abgeführt wird. Selbst wenn die Statorbewicklung nicht überall direkt von Kühlfluid bespült wird, ist die Kühlung sehr effektiv, weil die Bewicklung üblicherweise aus gut stromleitendem und damit auch gut wärmeleitendem Material besteht, so daß die Wärme in der Bewicklung leicht zu den fluidgekühlten Wärmeabfuhrbereichen fließt. Da ferner die Statorbewicklung an dem ferromagnetischen Stator angebracht ist, kann auch Verlustwärme aus dem eigentlichen Statormaterial über das Bewicklungsmaterial zu den fluidgekühlten Wärmeabfuhrstellen fließen. Die sogenannten Wicklungsköpfe, die beidseitig aus nutartigen Bereichen zwischen jeweils benachbarten Statorzähnen herauskommen, werden direkt durch Kühlfluid gekühlt. Die Wärmeleitungswege aus dem Inneren der nutartigen Bereiche zu den Wicklungsköpfen sind kurz. Es ist jedoch durchaus möglich, auch in den nutartigen Bereichen zwischen den Wicklungen benachbarter Statorpole genug Freiraum zum Hindurchströmen von Kühlfluid zu haben, so daß die Statorbewicklung insgesamt direkt mit Kühlfluid bespült wird.

Die jeweils zwischen der Statorpolbewicklung und der Abdeckung des Statorträgers vorgesehenen Verbindungspassagen, die sich in der Regel quer zur Erstreckungsrichtung der beiden Durchströmungsräume erstrecken, können entweder überall zwischen benachbarten Statorpolen vorhanden sein oder auch nur an einem Teil dieser Stellen. Die inneren Durchströmungspassagen, die in mindestens einigen, vorzugsweise allen, Statorpolen vorgesehen sind, ergeben eine direkte Innenkühlung des Statormaterials. Die inneren Durchströmungspassagen in den betreffenden Statorpolen verlaufen von den Verbindungspassagen zur Statorbasis.

Der Begriff "elektrische Maschine" wurde deshalb gewählt, um in erster Linie sowohl Elektromotoren als auch Stromgeneratoren zu umfassen. Die Verwendung der Begriffe "Statorteil" und "Läuferteil" soll nicht zwingend bedeuten, daß der Statorteil stationär ist und der Läuferteil relativ zu dem Statorteil bewegbar ist, obwohl diese Ausbildung die üblichere und bevorzugte ist; auch die umgekehrte Auslegung, also stationärer Läuferteil und relativ zu dem Läuferteil bewegter Statorteil, ist möglich. Die elektrische Maschine kann - um die beiden hauptsächlichsten Fälle zu nennen - entweder eine Rotationsmaschine, bei der sich Läuferteil und Statorteil rotierend relativ zueinander bewegen, oder eine Linearmaschine sein, bei der sich Läuferteil und Statorteil geradlinig relativ zueinander bewegen. Als Fluid für die Kühlung kommt eine Flüssigkeit oder ein Gas in Betracht, wobei wegen der höheren Wärmeabfuhrkapazität eine Flüssigkeit bevorzugt ist. Geeignete Kühlfluide sind bekannt, beispielsweise aus dem Transformatorenbau.

Wenn extrem große Kühlungsintensität gewünscht ist, kann die Statorbewicklung derart vorgesehen sein, daß mindestens an denjenigen Stellen der betreffenden Bewicklung der betreffenden Statorpole, die von Kühlfluid direkt bespült sind, Freiräume zwischen Leiterdrähten zum Hindurchströmen des Kühlfluids bestehen. In der extremsten Ausführung sind die Wicklungen der einzelnen Statorpole nicht - wie an sich üblich - "dicht-an-dicht" gewickelt und mit Vergußmasse vergossen, sondern sind die Leiterdrähte - beispielsweise unter Einsatz von abstandhalterartigen Teilen - derart mit gegenseitigem Abstand gewickelt, daß die Leiterdrähte einzeln von Kühlfluid umströmbar sind. Es sind selbstverständlich Zwischenformen möglich, bei denen Leiterdrahtgruppen dicht-an-dicht gewickelt sind und die genannten Freiräume zwischen benachbarten Leiterdrahtgruppen bestehen.

Die erfindungsgemäße Kühlung wird bevorzugt bei elektrischen Maschinen vorgesehen, die die nachfolgend genannten Ausbildungsmerkmale einzeln oder in Kombination aufweisen:

Elektronische Kommutierung, wie sie an sich bekannt ist und deshalb hier nicht genauer beschrieben werden muß.

Mit Dauermagneten aufgebauter Läuferteil. Bevorzugt sind hierbei hochkoerzitive Dauermagnete beziehungsweise Dauermagnete aus einem Material mit hohem Energieprodukt. Derartige Dauermagnete sind an sich bekannt, insbesondere aus Material auf der Basis eines oder mehrerer Seltenerdeelemente mit Cobalt oder auf der Basis von Eisen-Neodym-Material.

Aufbau des Läuferteils nach dem Flußkonzentrationsprinzip, wie es weiter unten noch genauer beschrieben wird und wie es aus dem Dokument EP-A-0331180 an sich bekannt ist.

Die Statorpol-Wicklungen sind jeweils nur einem Statorpol zugeordnet und überkreuzen sich nicht mit Wicklungen anderer Statorpole. Dies führt zu optimal kleinen, gut kühlbaren Wicklungsköpfen.

Auslegung der Maschine nach dem multiplen Prinzip, bei dem mehrere analoge Untereinheiten der Maschine jeweils für sich autark funktionsfähig sind. Ein Beispiel hierfür ist: Jeweils x Statorpolwicklungen hängen an einem gemeinsamen elektronischen Steller und einem gemeinsamen Sensor für die Erfassung der Relativstellung von Läuferteil und Statorteil für ein zeitrichtiges und vorzeichenrichtiges Ein- und Ausschalten beziehungsweise Umschalten der einzelnen Wicklungen. Insgesamt sind mehrere derartige Untereinheiten vorgesehen, so daß die Maschine auch bei Ausfall einer dieser Untereinheiten noch - wenn auch mit etwas reduzierter Leistung - funktionsfähig bleibt.

In den meisten Fällen fällt die Statorpol-Anordnungsrichtung mit der Relativ-Bewegungsrichtung von Läuferteil und Statorteil exakt zusammen. Es sind aber auch hiervon abweichende Ausführungsformen möglich.

Die Erfindung und Ausgestaltungen der Erfindungen werden im folgenden anhand von Ausführungsbeispielen noch näher erläutert. Nur das Ausführungsbeispiel gemäß Fig. 4 verwirklicht die in Anspruch 1 definierte Erfindung. Die Ausführungsbeispiele gemäß Figuren 1/2 sowie Fig. 3 sind jedoch für das Verständnis des Aufbaus des Maschine nützlich.

Es zeigt:
- Fig. 1: eine Maschine im Schnitt quer zur Statorpol-Anordnungsrichtung;
- Fig. 2: die Maschine von Fig. 1 in einem Schnitt rechtwinklig zum Schnitt der Fig. 1, also einem Schnitt in Richtung der Statorpol-Anordnungsrichtung;
- Fig. 3: eine abgewandelte Maschine in einem Schnitt wie Fig. 1, wobei der Läuferteil der Maschine weggelassen ist; und
- Fig. 4: eine weiter abgewandelte, die Erfindung verwirklichende Maschine in einem Schnitt wie Fig. 1, wobei der Läuferteil der Maschine weggelassen ist.

Beim Ausführungsbeispiel gemäß Figuren 1 und 2 erkennt man, jeweils unten, den Statorteil 4 und, jeweils oben, den Läuferteil 6 der elektrischen Maschine 2. Der Statorteil 4 besteht im wesentlichen aus einem Statorträger 8, den Statorpolen 10 und den auf jedem Statorpol 10 einzeln vorgesehenen Wicklungen 12. Im Schnitt der Fig. 1 hat der Statorträger eine U-förmige Gestalt mit einer Basiswand 14, zwei Seitenwänden 16 und einer die offene Seite des "U"-fluiddicht verschließenden Abdeckung 18. Im Schnitt der Fig. 2 wird deutlich, daß eine Reihe von in Richtung von links nach rechts benachbarten Statorpolen 10 vorgesehen ist. Jede Einzelwicklung 12 ist in Draufsicht (von oben in Fig. 1) eckabgerundet-rechteckig. Die einzelnen Statorpole 10 bzw. Statorzähne stehen auf ihrer der Abdeckung 18 abgewandten Seite dadurch über einen Magnetflußweg miteinander in Verbindung, daß das Material der Statorpole 10 unten U-förmig zu den jeweils benachbarten Statorpolen 10 herumgeführt ist. Jede Wicklung 12 reicht nach unten bis zu dem Magnetflußweg, reicht aber nach oben nicht bis zur Abdeckung 18.

Beim Läuferteil 6 wechseln trapezförmige Dauermagnete 19 mit dreieckigen Flußleitstücken 20 ab. Die Dauermagnete 19 können auch dreieckig sein, und die Flußleitstücke 20 können auch trapezförmig sein. Die Dauermagnete 19 sind, in Fig. 2 gesehen, in Richtung von links nach rechts magnetisiert. In den Flußleitstücken 20 wird der aus den Dauermagneten 19 austretende Magnetfluß um 90° umgelenkt und über einen Luftspalt 22 in die nach oben weisenden Statorpolflächen 24 geleitet. Man erkennt, daß in der Draufsicht (Fig. 1 und 2 von oben) die Magnetfluß-Austrittsflächen 26 der Flußleitstücke 20 kleiner sind als die Summe der in Fig. 1 sichtbaren Querschnittsflächen der beiden an das betreffende Flußleitstück 20 anschließenden Dauermagnete 19. Hierdurch ergibt sich eine Flußkonzentration an der betreffenden Magnetflußaustrittsfläche 26 des betreffenden Flußleitstücks 20. Maschinen nach dem Flußkonzentrationsprinzip, wofür vorstehend ein Beispiel gegeben worden ist, haben häufig eine besonders hohe Leistungsdichte und daher Wärmeentstehung auf engem Raum. Hierbei ist die erfindungsgemäße, besondere effektive Kühlung von besonderem Vorteil.

Aus Fig. 1 ist ersichtlich, daß zwischen der Einzelwicklung 12 des betreffenden Statorpols 10 und den beiden Seitenwänden 16 des Statorträgers 4 links ein erster Durchströmungsraum 30 und rechts ein zweiter Durchströmungsraum 32 für Kühlfluid 34 besteht. Beide Durchströmungsräume 30 und 32 erstrecken sich entlang der Reihe der Statorpole 10 und der diesen zugeordneten Einzelwicklungen 12. Es ist ersichtlich, daß das in diesen Durchströmungsräumen 30 und 32 strömende Kühlfluid 34 alle Einzelwicklungen 12 in denjenigen Bereichen bespült, die (in Fig. 1) links und rechts aus den Statornuten zwischen benachbarten Statorpolen 10 herauskommen. Diese Bereiche nennt man üblicherweise Wicklungsköpfe. Das Kühlfluid 34 bespült auch die oberen der Abdeckung 18 zugewandten Oberflächen der Wicklungsköpfe und die von Bewicklung freien Seitenflächen des Statormaterials.

Man erkennt ferner, daß zwischen den Einzelwicklungen 12 und der Abdeckung 18 Verbindungspassagen 36 gebildet sind, die in Fig. 1 von links nach rechts und in Fig. 2 senkrecht zur Zeichnungsebene zwischen dem ersten Durchströmungsraum 30 und dem zweiten Durchströmungsraum 32 verlaufen. Durch die Verbindungspassagen 36 werden die dortigen, der Abdeckung 18 zugewandten Oberflächen der Wicklungen 12 und die dortigen Statorpolbereiche von dem Kühlfluid bespült.

Die Abdeckung 18 besteht aus einem magnetisch und elektrisch nicht oder kaum leitenden Material, beispielsweise Kunststoff.

Fig. 2 kann man sich als Teil eines Linearmotors vorstellen, bei dem der Läuferteil 6 relativ zu dem stationären Statorteil 4 von rechts nach links entsprechend dem Pfeil 28 bewegbar ist. Man kann sich jedoch Fig. 2 auch als zu einer geraden Gestalt aufgebogenen Teilbereich eines Rotationsmotors mit Außen-Läuferteil vorstellen. Fig. 2 ist dann ein Querschnitt rechtwinklig zur unterhalb der Fig. 2 liegenden Rotationsachse des Motors; Fig. 1 ist dann ein Axialschnitt durch die obere Hälfte des Motors.

Der Hauptunterschied zwischen der beschriebenen Ausführungsform gemäß Fig. 1 und 2 und der Ausführungsform gemäß Fig. 3 besteht darin, daß die Statorpole 10 jeweils innere Durchströmungspassagen 38 aufweisen, die in Anordnungsrichtung der Statorpolreihe verlaufend den nutartigen Bereich auf der einen Seite des betreffenden Statorpols 10 mit dem nutartigen Bereich auf der anderen Seite des betreffenden Statorpols 10 miteinander verbinden und von dem Kühlfluid 34 durchströmbar sind. Die Durchströmungspassagen 38 haben im Schnitt der Fig. 3 die Gestalt eines sehr schmalen, aufrechten Rechtecks mit einer lichten Weite von kleiner als 1 mm waagrecht gemessen in Fig. 3. Zutritt und Austritt des Kühlfluids 34 erfolgen von den Verbindungspassagen 36 her.

Die Ausführungsform gemäß Fig. 4 unterscheidet sich von der Ausführungsform gemäß Fig. 3 dadurch, daß die Basiswand 14 des Statorträgers 8 innenseitig eine Ausnehmung 40 hat, die eine sich in Richtung der Anordnungsreihe der Statorpole 10 erstreckende Durchströmungspassage 40 darstellt. Diese Durchströmungspassage 40 steht in Verbindung mit den inneren Durchströmungspassagen 38 der betreffenden Statorpole 10. Die Durchströmungspassage 40 kann auch tiefer in der Basiswand 14 liegen und über Durchtritte mit den Durchströmungspassagen 38 verbunden sein.

Die hydraulische Auslegung dieser Ausführungsform ist so, daß das Kühlfluid an einer Stelle den beiden Durchströmungsräumen 30 und 32 zugeführt wird mehr oder weniger weit entlang der Durchströmungsräume 30 und 32 strömt, dann durch Verbindungspassagenabschnitte und Durchströmungspassagen 38 von der Abdeckung 18 weg zum Fuß des betreffenden Statorpols 10 strömt, und dann in der Durchströmungspassage 40 gesammelt und an einer geeigneten Stelle aus dem Statorträger 8 abgeführt wird.

Generell sei angemerkt, daß in der Regel ein geschlossener Kühlfluidkreislauf mit einer Umwälzpumpe und einem äußeren Wärmetauscher vorgesehen ist, damit das Kühlfluid 34 ordnungsgemäß durch die Durchströmungs- räume 30 und 32, ggf. Verbindungspassagen 36, ggf. Durchströmungspassagen 38 sowie gegebenenfalls die Durchströmungspassage 40 gepumpt werden kann.

Generell sei ferner angemerkt, daß als Material für die Statorpole 10 in erster Linie geblechtes, ferromagnetisches Material in Frage kommt oder eine Herstellung aus pulverförmigem, kunststoffgebundenem, ferromagnetischem Material. Es versteht sich, daß die Abdeckung 18 den rinnenförmigen Innenraum des StatorStatorträger fluiddicht abschließt.

Die Gesamtheit der Einzelwicklungen 12 der Statorpole 10 ist in der Beschreibungseinleitung Statorbewicklung genannt.

Zusätzlich können Maßnahmen an sich bekannter Art zur Erhöhung des Wärmeübergangs vom Statormaterial und/oder von der Statorbewicklung auf das Kühlfluid vorgesehen sein, insbesondere hohe Kühlfluid-Strömungsgeschwindigkeit und/oder gezielte Turbulenzsteigerung.

## Patentansprüche

1. Elektrische Maschine (2) mit:
a) einem Statorteil (4), der Statorpole (10) und eine Stromleiter-Bewicklung (12) aufweist;
b) einem Läuferteil (6), der unter Freilassung eines Luftspalts (22) gegenüber dem. Statorteil (4) angeordnet ist und in magnetischer Wechselwirkung mit diesem steht;
c) wobei der Statorteil (4) und der Läuferteil (6) relativ zueinander in einer Richtung (28) bewegbar sind, die mindestens im wesentlichen derjenigen Richtung entspricht, in der die Statorpole (10) aufeinanderfolgend angeordnet sind;
d) einem Statorträger (8), an dem die Statorpole (10) mitsamt ihrer Bewicklung (12) angebracht sind, und der - im Schnitt quer zu der genannten Statorpol-Anordnungsrichtung (28) betrachtet - eine im wesentlichen U-förmige Gestalt mit einer Basiswand (14) und zwei Seitenwänden (16) hat und auf seiner Luftspaltseite eine verschließende Abdeckung (18) aufweist;
e) einem ersten Durchströmungsraum (30) für Kühlfluid (34) zwischen den Statorpolen (10) und der ersten Seitenwand (16) des Statorträgers (8) sowie einem zweiten Durchströmungsraum (32) für Kühlfluid (34) zwischen den Statorpolen (10) und der zweiten Seitenwand (16) des Statorträgers (8), wobei die beiden Durchströmungsräume (30; 32) entlang der Reihe der Statorpole (10) verlaufen, so daß das Kühlfluid (34) mindestens Teilbereiche der Statorpolbewicklung bespülen kann;
f) einer im wesentlichen in der Statorpol-Anordnungsrichtung (28) verlaufenden, ersten Durchströmungspassage (40) für Kühlfluid (34), die in der Basiswand (14) des Statorträgers (8) oder in dem Statormaterial vorgesehen ist; und
g) inneren, zweiten Durchströmungspassagen (38) für Kühlfluid (34), die durch mindestens einige der Statorpole (10) hindurchführen und mit den Durchströmungsräumen (30; 32) sowie der ersten Durchströmungspassage (40) in Verbindung stehen,
dadurch gekennzeichnet,
h) daß mindestens an einigen Stellen Räume zwischen der Statorpolbewicklung (12) und der Abdeckung (18) des Statorträgers (8) als Verbindungspassagen (36) für Kühlfluid (34) vorgesehen sind, die mit den Durchströmungsräumen (30; 32) sowie zugeordneten, zweiten Durchströmungspassagen (38) in Verbindung stehen;
i) und daß der Kühlfluid-Strömungsweg insgesamt derart ausgelegt ist, daß das Kühlfluid (34) zunächst in dem ersten und dem zweiten Durchströmungsraum (30; 32) entlang der Reihe der Statorpole (10) strömt und dann durch die Verbindungspassagen (36) und die zweiten Durchströmungspassagen (38) in den Statorpolen (10) in die abflußsammelnde, erste Durchströmungspassage (40) strömt oder umgekehrt.

2. Elektrische Maschine (2) nach Anspruch 1,
dadurch gekennzeichnet,
daß mindestens ein Teil der Statorpole (10) jeweils mit einer Wicklung (12) versehen ist, die zwischen Leiterdrähten Freiräume zum Hindurchströmen des Kühlfluids (34) aufweist.

3. Elektrische Maschine (2) nach einem der Ansprüche 1 bis 2,
dadurch gekennzeichnet,
daß sie als elektronisch kommutierter Elektromotor ausgebildet ist.

4. Elektrische Maschine (2) nach einem der Ansprüche 1 bis 3,
dadurch gekennzeichnet,
daß der Läuferteil (6) als mit Dauermagneten (19) besetzter Erregerteil der Maschine (2) ausgebildet ist.

5. Elektrische Maschine (2) nach Anspruch 4,
dadurch gekennzeichnet,
daß hochkoerzitive Dauermagnete (19) vorgesehen sind.

6. Elektrische Machine (2) nach Anspruch 4 oder 5,
dadurch gekennzeichnet,
daß der Lauferteil (6) nach dem Flußkonzentrationsprinzip ausgelegt ist, wobei
- in Richtung der Reihe der Dauermagnete (19) fortschreitend - Dauermagnete (19), die in dieser Richtung magnetisiert sind, und Magnetflußleitstücke (20) miteinander abwechseln und wobei. die Magnetflußleitstücke (20) - in der Projektion auf die Luftspaltfläche (22) gesehen - jeweils eine Magnetflußaustrittsfläche haben, die weniger als doppelt so groß wie die Fläche eines Dauermagneten (19) - in der Projektion in Richtung der Dauermagnetreihe gesehen - ist.

7. Elektrische Maschine (2) nach einem der Ansprüche 1 bis 6,
dadurch gekennzeichnet,
daß die Statorpol-Wicklungen (12) jeweils nur einem Statorpol (10) zugeordnet sind.

## Claims

1. An electric machine (2) comprising:
a) a stator part (4) having stator poles (10) and a current conductor winding (12);
b) an armature (movable) part (6) disposed opposite the stator part (4) so as to leave an air gap (22) therebetween and being in magnetic correlation with the stator part (4);
c) the stator part (4) and the armature part (6) being movable relative to each other in a direction (28) corresponding at least in essence to that direction in which the stator poles (10) are arranged in succession;
d) a stator support (8) to which the stator poles (10) are attached along with the winding (12) thereof and which - as seen in a sectional view transversely to the afore-mentioned direction (28) of arrangement of the stator poles - has a substantially U-shaped configuration including a base wall (14) and two sidewalls (16) and having a closing cover (18) on its air gap side;
e) a first flow space (30) for cooling fluid (34) between the stator poles (10) and the first sidewall (16) of the stator support (8) as well as a second flow space (32) for cooling fluid (34) between the stator poles (10) and the second sidewall (16) of the stator support (8), the two flow spaces (30; 32) extending along the series of the stator poles (10), such that the cooling fluid (34) can flow at least across partial regions of the stator pole winding;
f) a first flow passage (40) for cooling fluid (34) extending substantially in the direction (28) of arrangement of the stator poles and provided in the base wall (14) of the stator support (8) or in the stator material; and
g) interior, second flow passages (38) for cooling fluid (34) extending at least through some of the stator poles (10) and being in communication with the flow spaces (30; 32) and the first flow passage (40),
characterized in
h) that, at least at some locations, spaces between the stator pole winding (12) and the cover (18) of the stator support (8) are provided as connecting passages (36) for cooling fluid (34), which communicate with the flow spaces (30; 32) as well as with associated, second flow passages (38);
i) and that the cooling fluid flow path as a whole is designed such that the cooling fluid (34) at first flows in the first and second flow spaces (30; 32) along the series of stator poles (10) and then flows through the connecting passages (36) and the second flow passages (38) in the stator poles (10) into the discharge-collecting first flow passage (40), or vice versa.

2. An electric machine (2) according to claim 1, characterized in that at least part of the stator poles (10) is provided with a coil (12) each which has free spaces between conductor wires for allowing the cooling fluid (34) to flow therethrough.

3. An electric machine (2) according to any one of claims 1 and 2, characterized in that it is constructed as an electronically commutated electric motor.

4. An electric machine (2) according to any one of claims 1 to 3, characterized in that the armature part (6) is desiged as exciter part of the machine (2) that is equipped with permanent magnets (13).

5. An electric machine (2) according to claim 4, characterized in that highly coercive permanent magnets (19) are provided.

6. An electric machine (2) according to claim 4 or 5, characterized in that the armature part (6) is constructed in accordance with the flux concentration principle, wherein - when progressing in the direction of the series of the permanet magnets (19) - permanent magnets (19) magnetized in this direction and magnetic flux conduction members (20) alternate with each other, and the magnetic flux conduction members (20) - as seen in a projection onto the air gap area (22) - each having a magnetic flux exit area that is less than twice as large as the area of a permanent magnet (19) - as seen in a projection in the direction of the permanent magnet series.

7. An electric machine (2) according to any one of claims 1 to 6, characterized in that the stator pole coils (12) each are associated with one stator pole (10) only.

## Revendications

1. Machine électrique (2) avec :
a) un stator (4), présentant des pôles de stator (10) et un enroulement à conducteurs électriques (12);
b) un rotor (6) disposé en laissant libre un entrefer (22) en face du stator (4) et sousmis en interaction alternative magnétique avec le stator (4);
c) le stator (4) et le rotor (6) étant déplaçables l'un par rapport à l'autre dans une direction (28), correspondant au moins sensiblement à la direction dans laquelle les pôles de stator (10) sont disposés successivement;
d) un support de stator (8) sur lequel sont appliqués les pôles de stator (10) conjointement avec leur enroulement (12) et présentant - observé dans une coupe transversale à la direction d'agencement (28) des pôles stator cités - une forme sensiblement en U avec une paroi de base (14) et deux parois latérales (16) et présentant sur le côté de son entrefer un recouvrement de fermeture (18);
e) une première chambre de passage (30) pour un fluide de refroidissement (34), entre les pôles de stator (10) et la première paroi latérale (16) du support de stator (8) ainsi qu'une deuxième chambre de passage (32) pour du fluide de refroidissement (34), entre les pôles de stator (10) et la deuxième paroi latérale (16) du support de stator (8), les deux chambres de passage (30; 32) s'étendant le long de la série de pôles de stator (10), de sorte que le fluide de refroidissement (34) peut irriguer au moins des zones partielles de l'enroulement de pôles de stator;
f) un premier passage d'écoulement (40), s'étendant sensiblement dans la direction d'agencement (28) des pôles de stator, pour le fluide de refroidissement (34), prévu dans la paroi de base (14) du support de stator (8) ou dans la masse du stator; et
g) des deuxièmes passages d'écoulement (38) intérieurs pour le fluide refroidissement (34), passant par au moins quelques uns des pôles de stator (10) et reliés aux chambres de passage (30; 32) ainsi qu'au premier passage d'écoulement (40),
caractérisé en ce que,
h) au moins en quelques endroits, des chambres sont prévues entre le bobinage de pôle de stator (12) et le recouvrement (18) du support de stator (8), pour servir de passage de liaison (36) au fluide de refroidissement (34) et aux chambres de passage (30; 32) ainsi qu'aux deuxièmes passages d'écoulement (38) associés;
i) et en ce que le trajet d'écoulement du fluide de refroidissement est conçu globalement de façon que le fluide de refroidissement (34) s'écoule d'abord dans les premier et deuxième passage d'écoulement (30; 32) le long de la série de pôles de stator (10), et s'écoule ensuite dans les passages de liaison (36) et les deuxièmes passages d'écoulement (38) dans les pôles de stator (10), dans le premier passage d'écoulement (40), assurant le regroupement de l'évacuation de l'écoulement, ou inversement.

2. Machine électrique (2) selon la revendication 1, caractérisée en ce qu'au moins une partie des pôles de stator (10) est chaque fois pourvue d'un enroulement (12) présentant entre des fils de conducteur des espaces libres destinés à faire passer le fluide de refroidissement (34).

3. Machine électrique (2) selon l'une des revendications 1 à 2, caractérisée en ce qu'elle est conformée en moteur électrique commuté électroniquement.

4. Machine électrique (2) selon l'une des revendications 1 à 3, caractérisée en ce que le rotor (6) est conformé en partie d'excitation de la machine, pourvue d'aimants permanents (19).

5. Machine électrique (2) selon la revendication 4 caractérisé en ce que des aimants permanents à haute coercitivité sont prévus.

6. Machine électrique (2) selon la revendication 4 ou 5, caractérisée en ce que le rotor (6) est réalisé selon le principe de la concentration du flux, tandis que en allant dans la direction de la suite d'aimants permanents (19) - des aimants permanents (10), magnétisés dans cette direction, et des pièces de guidage de flux (20) sont alternativement disposées, les pièces de guidage de flux (20) - vu en projection sur la surface de l'entrefer (22) - ayant chacune une surface de sortie du flux magnétique inférieure au double de celle d'un aimant permanent (19) - vue en projection en direction de la suite d'aimants permanents.

7. Machine électrique (2) selon l'une des revendications 1 à 6, caractérisée en ce que les enroulements de stator (12) sont affectés chacun à un seul pôle de stator (10).
